# EUROPEAN PATENT SPECIFICATION

(11) **EP 2 130 420 B1**
(45) Date of publication and mention of the grant of the patent: **29.02.2012**
(21) Application number: 09006865.1
(22) Date of filing: 21.05.2009
(51) Int. Cl.: A01B 59/00, A01B 59/06, A01B 63/118, A01B 63/00

(54) **Tractor implement hitches**
Traktorwerkzeuganbauvorrichtungen
Crochets à outils pour tracteur

(30) Priority: 04.06.2008 GB 0810137
(43) Date of publication of application: 09.12.2009
(73) Proprietor: AGCO GmbH, 87616 Marktoberdorf (DE)
(72) Inventor: Wolfle, Gottlieb, 87616 Marktoberdorf (DE); Ott, Max, 87616 Marktoberdorf (DE); Pils, Stefan, 87634 Ebersbach (DE)
(74) Representative: Morrall, Roger

(56) References cited:
- DE-A1- 3 150 587
- DE-A1-102005 017 578
- GB-A- 819 912
- US-A- 5 746 275
- US-A1- 2003 230 744

## Description

This invention relates to tractors having implement hitches in which a pair of lower links are pivotally mounted on a tractor chassis and each link has a lifting rod connected with a hitch actuator which is used to pivot the lower link relative to the tractor chassis and hence raise and lower any implement connected with the lower links.

Such hitches are standard at the rear of agricultural and industrial tractors and it is known to have variable length lift rods as shown, for example, in DE-A-3150587. It is also well known to have a towing hitch mounted on the rear of such a tractor at a location between the lower links for the attachment of a trailer or implement via a drawbar. Problems can arise with such installations as the lower links can impede the ability of any drawbar mounted on the towing hitch to pivot relative to the rear of the tractor thus restricting the turning capability of the tractor and trailer.

It is an object of the present invention to provide a tractor with an implement hitch which at least mitigates the above problem by enabling the tractor operator to increase the height of which the lower links can be raised to clear the drawbar.

Thus in accordance with the present invention there is provided a tractor having a chassis with an implement hitch comprising a pair of lower links pivoted on the tractor chassis, each lower link having a lift rod connected with a hitch actuator which is used to raise the lower links relative to the chassis, and a towing hitch mounted on the chassis between the lower links, characterised in that each lift rod is provided with a means for shortening its effective length between a first longer length in which the hitch occupies a lower operative position and a second shorter length in which the hitch occupies a higher inoperative position, the lower links being raised clear of any drawbar coupled to the towing hitch when the lift rods are in their shorter length position.

Conveniently each lift rod may be in two parts whose level of overlapping can be changed to provide the longer and shorter lengths, and locking means are provided to lock the two parts of the lift rod in the two overlapping configurations to change its effective length.

For example, one part of the lift rod may slide relative to the other part and a pivoting locking member on one part may engage behind an abutment on the other part to lock the two parts in the more overlapping configuration which provides the shorter effective length.

A convenient form of the above arrangement can be provided by having a piston like member on one part which slides within the other part of the lift rod and a spring loaded locking member which engages behind the piston like member to lock the two lift rod parts in the more overlapping configuration.

An alternative form of the present invention provides an arrangement in which the point of attachment of each lift rod relative to its respective lower link can be moved nearer the outer end of the lower link remote from the link pivot thus shortening the effective length of each lift rod.

For example, each lift rod may be normally attached to its respective lower link by a bolt and when the point of attachment is moved nearer the outer end of the lower link a coupling ball attached to the lift rod is gripped in an implement coupling hook provided on the outer end of the lower link.

The present invention will now be described, by way of example, with reference to the accompanying drawings in which:-
- Figure 1: shows a side view of a rear portion of a tractor chassis showing fitted with an implement hitch in accordance with the present invention in its normal maximum height position;
- Figure 2: shows the implement hitch of Figure 1 raised to a higher level using the arrangement of the present invention;
- Figures 3 and 4: show part of the implement hitch of Figure 1 with a locking means in disengaged and engaged conditions respectively, and
- Figures 5 to 8: shows side and plan views of an alternative arrangement of implement hitch in accordance with the present invention in normal maximum and higher maximum height positions.

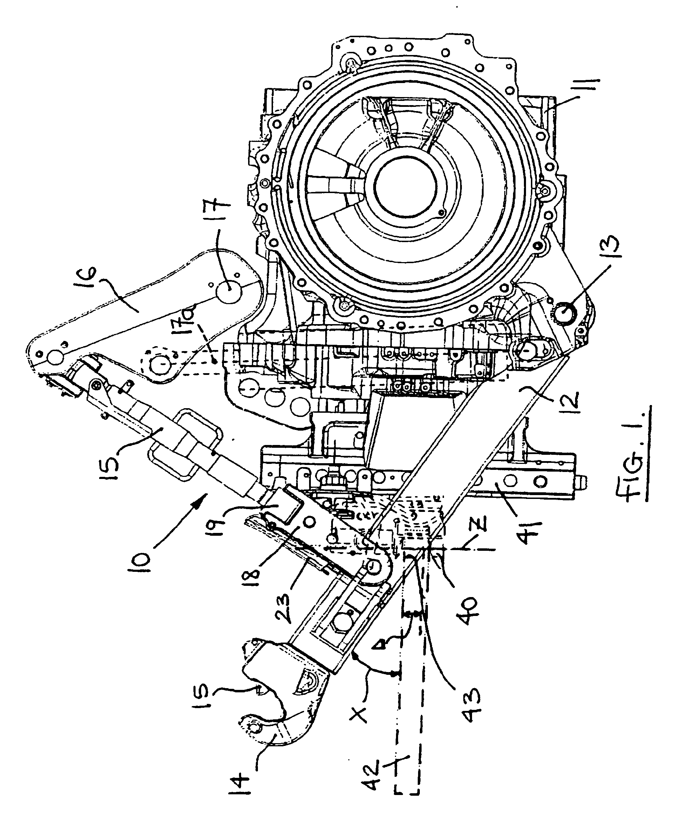

Referring to the drawings, Figure 1 shows part of a three point hitch 10 mounted on the rear of a tractor chassis 11. The hitch has two lower links 12, only which one of which is visible Figure 1, which are pivotally mounted at 13 on the tractor chassis 11. Each lower link has at its outer end a coupling hook 14 which is provided with the conventional spring loaded latch 15.

As is normal each lower link 12 is raised an lowered relative to the chassis 11 by lift rods 15 which are connected with lift arms 16 which are in turn mounted on the chassis by a cross shaft 17. As is conventional, the lift arms 16 are rotated with cross shaft 17 by one or more hitch actuators 17a which act between the lift arms and the tractor chassis. The three point hitch 10 is completed by a so-called "top-link " (not shown) which is again pivotally mounted on the tractor chassis 11.

Figure 1 shows the lower links 12 in their normal maximum height position. A towing hitch 40 is mounted in a conventional manner on vertical rails 41 located between links 12. As can be seen from Figure 1, a trailer drawbar 42 connected with hitch 40 may interfere with the links 12 in the region 43 thus restricting the turning of the associated trailer.

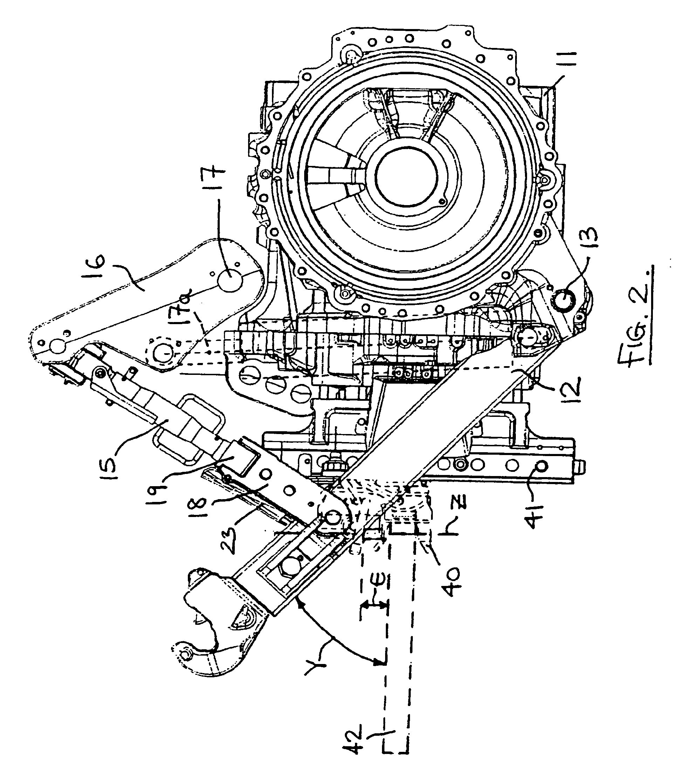

In accordance with the present invention, the effective length of each of the lift rods 15 can be shortened in a stepwise manner so that the lower links 12 can be raised to higher position, as shown in Figure 2, by the actuators 17a where the drawbar 42 no longer interferes with the lower links 12.

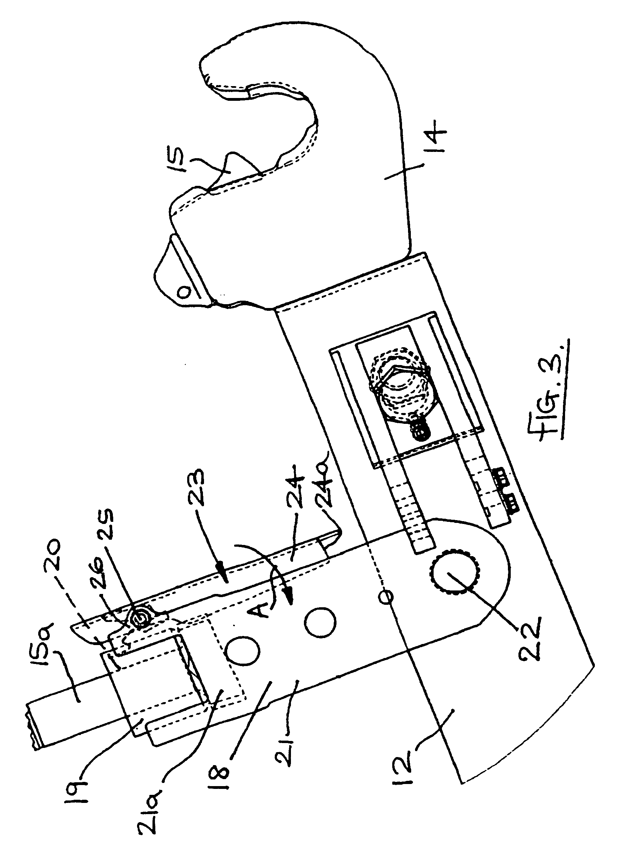

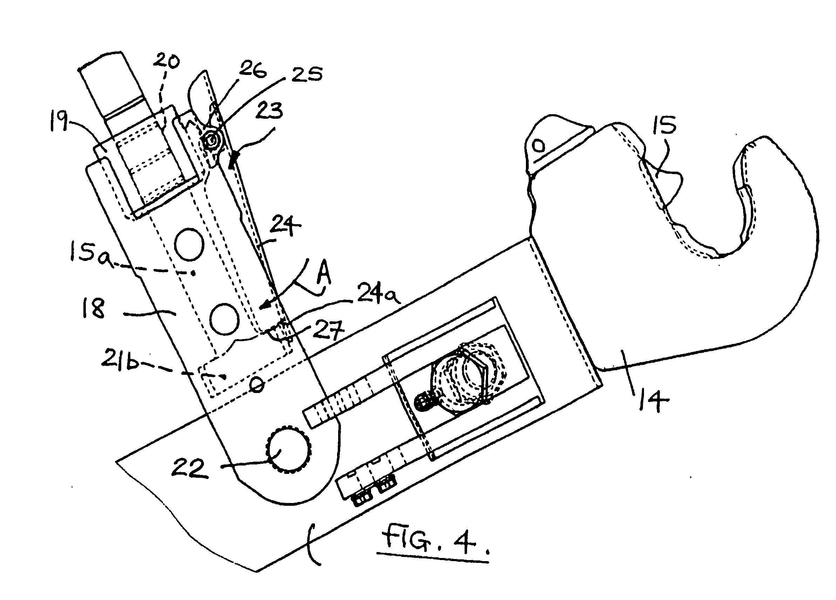

As best seen in Figures 3 and 4, the lower end of each lift rod 15 comprises a pair of plates 18 welded to a collar 19 through which the main body 15a of each lift rod is slideable in a bore 20. On the lower end of 15a of lift rod is is provided a piston-like member 21 which can move between end positions 21a and 2 1 b shown in Figures 3 and 4 respectively. The plates 18 are secured to the associated lower link 12 by a bolt 22. Also mounted on the plates 18 is a locking device 23 which comprises an arm 24 pivoted on the plates 18 by a bolt 25.

The arm 24 is spring-loaded by a spring 26 so as to tend to rotate about the pivot bolt 25 in the direction of the arrow A of Figures 3 and 4.

When the piston like member 21 is in the position 21a the lift rods 18 have their normal operating length in which the piston like member 21 abuts the lower end of the collar 19 and the lower links 12 can be raised to the position shown in Figure 1.

To reduce the effective length of the lift rods 15 in a stepwise manner and thus to enable the lower links 12 to be raised to a higher position shown in Figure 2, the piston like member 21 is locked in position 21b by allowing the lever 24 to pivot to the Figure 4 position under the action of a spring 26 which surrounds the pivot pin 25. With the lever 24 in the Figure 4 position the end 24a of the lever 24 engages behind a shoulder 27 provided on the member 21 to hold the piston member in the 21b position thus shortening the effective length of the lift rods 15.

Typically with the member 21 in the 21a position the lower links can be raised to an angle X of 32 degrees above the horizontal and the lower edges of the links 12 are approximately 50mm below the upper surface of the drawbar 42 at the pivot axis Z of the drawbar(see distance D in Figure 1). By shortening the effective length of the lift rods 15 with the member 21 in the 21b position the lower links can be raised by an extra 13 degrees to an angle Y of 45 degrees above the horizontal and the vertical distance E of the lower edges of the links 12 is now approximately 60mm above the upper surface of the drawbar at the pivot axis Z. Thus the clearance of the lower edges of the links 12 has been increased by approximately 1 10mm on the pivot axis Z.

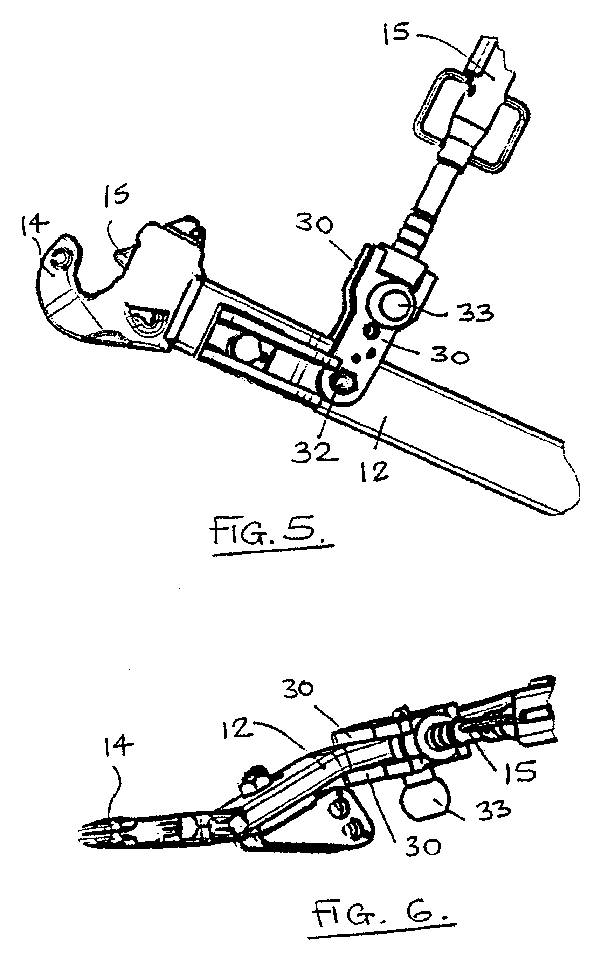

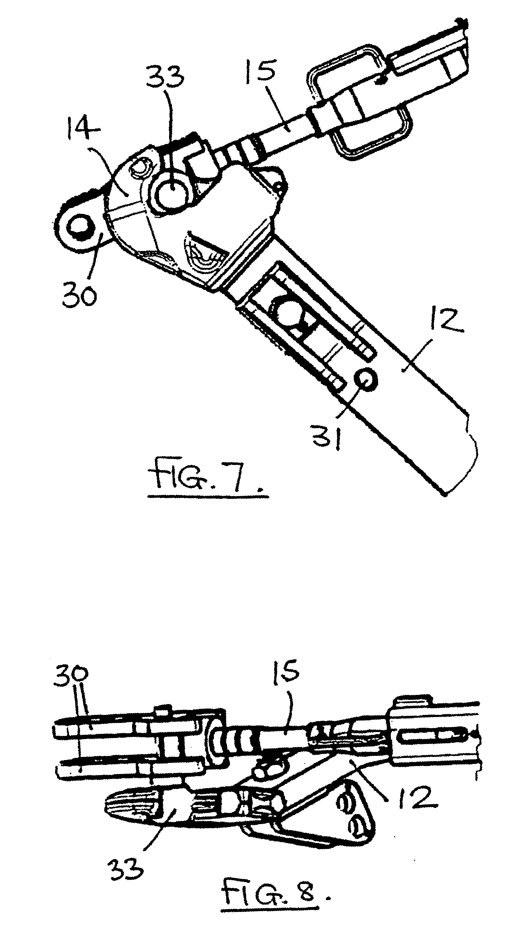

Figures 5 to 8 show an alternative arrangement in which the lower end of each lift rod 15 is provided with plates 30 which are normally secured to the lower link 12 through an aperture 31 using a bolt 32 as shown in Figures 5 and 6. A coupling ball 33 is permanently mounted on the inside plate 30 and when it is desired to shorten the effective length of the lift rods the bolt 32 is removed and the coupling ball 33 is gripped in the coupling hook 14 thus shortening the effective length of the lift rods and allowing the lower links 12 to be raised to a higher position as shown in Figures 7 and 8.

## Claims

1. A tractor having a chassis (11) with an implement hitch (10) comprising a pair of lower links (12) pivoted on the tractor chassis (11), each lower link (12) having a lift rod (15) connected with a hitch actuator (17a) which is used to raise the lower links (12) relative to the chassis (11), and each lift rod (15) is provided with a means for shortening its effective length (18,20) between a first longer length in which the hitch occupies a lower operative position and a second shorter length in which the hitch occupies a higher inoperative position, **characterised in that** a towing hitch (40) is mounted on the chassis (11) between the lower links (12), the lower links (12) being raised clear of any drawbar (42) coupled to the towing hitch (40) when the lift rods are in their shorter length position.

2. A tractor according to claim 1 in which each lift rod (15) is in two parts whose level of overlapping can be changed to provide the longer and shorter lengths and locking means (23) are provided to lock the two parts of the lift rod in the two overlapping configurations to change its effective length.

3. A tractor according to claim 2 in which one part of the lift rod (15) slides relative to the other part and a pivoting locking member (23) on one part may engage behind an abutment on the other part to lock the two parts in the more overlapping configuration which provides the shorter effective length.

4. A tractor according to claim 3 having a piston like member (21) on one part which slides within the other part of the lift rod (20) and a spring loaded locking member (24) which engages behind the piston like member (21) to lock the two lift rod parts in the more overlapping configuration.

5. A tractor according to claim 1 in which the point of attachment of each lift rod (15) relative to its respective lower link (12) can be moved nearer the outer end of the lower link (12) remote from the link pivot (13) thus shortening the effective length of each lift rod.

6. A tractor according to claim 5 in which each lift rod (15) is normally attached to its respective lower link (12) by a bolt (22) and when the point of attachment is moved nearer the outer end of the lower link (12) a coupling ball (33) attached to the lift rod (15) is gripped in an implement coupling hook (14) provided on the outer end of the lower link (12).

## Patentansprüche

1. Zugfahrzeug oder Traktor mit einem Chassis (11) mit einer Kopplungseinrichtung (10) für ein Anbaugerät, Arbeitsgerät oder Werkzeug mit einem Paar unterer Verbindungselemente (12), die gegenüber dem Chassis (11) verschwenkt werden, wobei jedes untere Verbindungselement (12) eine Liftstange (15) besitzt, die mit einem Kopplungseinrichtungs-Aktuator (17a) verbunden ist, der zum Anheben der unteren Verbindungselemente (12) gegenüber dem Chassis (11) verwendet wird, wobei jede Liftstange (15) mit einem Organ zur Verkürzung der wirksamen Länge (18, 20) von einer ersten längeren Länge, in welcher die Kopplungseinrichtung eine untere Betriebsposition einnimmt, und einer zweiten kürzeren Länge, in welcher die Kopplungseinriclltung eine höhere, nicht betriebswirksame Position einnimmt, ausgestattet ist, **dadurch gekennzeichnet, dass** eine Zug-Kopplungseinrichtung (40) an dem Chassis (11) zwischen den unteren Verbindungselementen (12) montiert ist und dass die unteren Verbindungselemente (12) frei von jedweder Zugstange oder Anhängedeichsel (42), die mit der Zug-Kopplungseinrichtung (40) gekoppelt ist, angehoben werden, wenn sich die Liftstangen in ihren kürzeren Längen-Positionen befinden.

2. Zugfahrzeug oder Traktor nach Anspruch 1, **dadurch gekennzeichnet, dass** jede Liftstange (15) zweiteilig ist oder zwei Teile besitzt, wobei ein oder deren Ausmaß der Überlappung zur Herbeiführung der längeren und kürzeren Länge verändert werden kann, und dass Rastierungs- oder Verriegelungsorgane (23) vorhanden sind zum Rastieren oder Verriegeln der beiden Teile der Liftstange in den zwei überlappenden Konfigurationen zur Veränderung der wirksamen Länge.

3. Zugfahrzeug oder Traktor nach Anspruch 2, **dadurch gekennzeichnet, dass** ein Teil der Liftstange (15) relativ zu dem anderen Teil gleitet und dass zur Gewährleistung der kürzeren effektiven Länge ein Schwenk-Rastierungs- oder Verriegelungsorgan (23) an einem Teil hinter einen Anschlag an dem anderen Teil eingreifen kann zum Rastieren oder Verriegeln der beiden Teile in der weiter überlappenden Konfiguration.

4. Zugfahrzeug oder Traktor nach Anspruch 3, **dadurch gekennzeichnet, dass** an einem Teil ein kolbenähnliches Element (21) vorhanden ist, welches in dem anderen Teil der Liftstange (20) gleitet, und dass ein federbeaufschlagtes Rastierungs- oder Verriegelungsorgan (24) vorhanden ist, welches hinter das oder dem kolbenähnliche(n) Element (21) eingreift zur Rastierung oder Verriegelung der zwei Teile der Liftstange in der stärker überlappenden Konfiguration.

5. Zugfahrzeug oder Traktor nach Anspruch 1, **dadurch gekennzeichnet, dass** der Punkt für die Befestigung jeder Liftstange (15) relativ zu dem zugeordneten unteren Verbindungselement (12) näher an das äußere Ende des unteren Verbindungselements (12), welches entfernt von dem Verbindungs-Gelenk (13) angeordnet ist, bewegt werden kann, so dass die wirksame Länge jeder Liftstange verringert wird.

6. Zugfahrzeug oder Traktor nach Anspruch 5, **dadurch gekennzeichnet, dass** jede Liftstange (15) normalerweise durch einen Bolzen (22) an dem zugeordneten unteren Verbindungselement (12) befestigt ist und, wenn der Punkt für die Befestigung näher an das äußere Ende des unteren Verbindungselements (12) bewegt wird, eine Kopplungs-Kugel (33), die an der Liftstange (15) befestigt ist, in oder von einem Kopplungs-Haken (14) für das Anbaugerät, Arbeitsgerät oder Werkzeug, der an dem äußeren Ende des unteren Verbindungselements (12) vorhanden ist, gegriffen wird.

## Revendications

1. Tracteur comportant un châssis (11) avec un crochet d'attelage d'accessoire (10) comprenant une paire de biellettes inférieures (12) montées afin de pivoter sur le châssis de tracteur (11), chaque biellette inférieure (12) comportant une tige de levage (15) couplée à un actionneur de crochet d'attelage (17a) qui est utilisé de manière à soulever les biellettes inférieures (12) par rapport au châssis (11) et chaque tige de levage (15) comporte un moyen destiné à raccourcir sa longueur utile (18, 20) entre une première longueur la plus élevée, dans laquelle le crochet d'attelage occupe une position opérationnelle abaissée et une seconde longueur la plus faible dans laquelle le crochet d'attelage occupe une position inopérante surélevée, **caractérisé en ce qu'**un crochet de remorquage (40) est monté sur le châssis (11) entre les biellettes inférieures (12), les biellettes inférieures (12) étant soulevées en l'absence d'une quelconque barre de traction (42) couplée au crochet de remorquage (40) lorsque les tiges de levage sont dans leur position de longueur la plus faible.

2. Tracteur selon la revendication 1, dans lequel chaque tige de levage (15) est en deux parties dont le niveau de recouvrement peut être modifié afin d'assurer les longueurs la plus élevée et la plus faible et des moyens de verrouillage (23) sont prévus afin de verrouiller les deux parties de la tige de levage dans les deux configurations de recouvrement de manière à modifier sa longueur utile.

3. Tracteur selon la revendication 2, dans lequel une première partie de la tige de levage (15) coulisse par rapport à l'autre partie et un élément de verrouillage pivotant (23) sur la première partie peut être couplé à l'arrière d'une butée sur l'autre partie afin de verrouiller les deux parties dans la configuration présentant le plus grand recouvrement qui assure la longueur utile la plus faible.

4. Tracteur selon la revendication 3, comportant un élément en forme de piston (21) sur la première partie qui coulisse à l'intérieur de l'autre partie de la tige de levage (20) et un élément de verrouillage chargé par ressort (24) qui est couplé à l'arrière de l'élément en forme de piston (21) afin de verrouiller les deux parties de tige de levage dans la configuration présentant le plus grand recouvrement.

5. Tracteur selon la revendication 1, dans lequel le point de fixation de chaque tige de levage (15) par rapport à sa biellette inférieure respective (12) peut être déplacé au plus près de l'extrémité externe de la biellette inférieure (12) distante par rapport au pivot de biellette (13) raccourcissant ainsi la longueur utile de chaque tige de levage.

6. Tracteur selon la revendication 5, dans lequel chaque tige de levage (15) est normalement fixée sur sa biellette inférieure respective (12) par une vis (22) et lorsque le point de fixation est déplacé au plus près de l'extrémité externe de la biellette inférieure (12), une rotule de couplage (33) fixée sur la tige de levage (15) est accrochée sur un crochet de couplage d'accessoire (14) agencé sur l'extrémité externe de la biellette inférieure (12).
